# EUROPÄISCHE PATENTSCHRIFT

(11) **EP 1 082 013 B1**
(45) Veröffentlichungstag und Bekanntmachung des Hinweises auf die Patenterteilung: **02.07.2003**
(21) Anmeldenummer: 99923594.8
(22) Anmeldetag: 14.05.1999
(51) Int. Cl.: A01N 43/22

(54) **VERWENDUNG VON SPINOSYNEN ZUM EINSATZ ALS BODENINSEKTIZIDE**
USE OF SPINOSYNES AS SOIL INSECTICIDES
UTILISATION DE SPINOSYNES COMME INSECTICIDES POUR LE SOL

(30) Priorität: 26.05.1998 DE 19823397
(43) Veröffentlichungstag der Anmeldung: 14.03.2001
(73) Patentinhaber: Bayer CropScience AG, 40789 Monheim (DE); Dow Agrosciences LLC, Indianapolis, Indiana 45268-1054 (US)
(72) Erfinder: ANDERSCH, Wolfram, D-51469 Bergisch Gladbach (DE)
(86) Internationale Anmeldenummer: EP9903318
(87) Internationale Veröffentlichungsnummer: WO99060856

(56) Entgegenhaltungen:
- WO-A-93/09126
- WO-A-97/00265
- CHEMICAL ABSTRACTS, vol. 125, no. 11, 9. September 1996 (1996-09-09) Columbus, Ohio, US; abstract no. 135392, M.BURTON ET AL.: "Tracer naturalyte insect control physical property attributes" XP002114417 & PROC. - BELTWIDE COTTON CONF., Bd. 2, 1996, Seiten 696-697,
- DATABASE CROPU [Online] STN-International STN-accession no. 1998-89293, D.GERACE ET AL.: "Control of green peach aphid on hibiscus" XP002114418 & ARTHROPOD MANAGE. TESTS, Bd. 23, 1998, Seite 346
- A.ADAN ET AL.: "Laboratory Evaluation of the Novel Naturally Derived Compound Spinosad against Ceratitis capitata" PESTICIDE SCIENCE, Bd. 48, 1996, Seiten 261-268, XP000682711 BARKING GB
- BRET ET AL.: 'Biological Properties of Spinosad' DOWN TO EARTH (DOW AGROSCIENCE) Bd. 52, Nr. 1, 1997, Seiten 6 - 13

## Beschreibung

Die vorliegende Erfindung betrifft die Verwendung von Spinosynen insbesondere zur Bodenbehandlung, sowie zur Beizung von Saatgut bzw. Pflanzengut, sowie zum Angießen und bei der Bewässerung von Pflanzen.

Es ist bekannt, daß man Spinosyne zur Bekämpfung von Insekten verwenden kann (WO 97/00 265, WO 93/09 126, WO 94/20 518, US-5 362 634).

Es wurde nun gefunden, daß Spinosyne systemische Eigenschaften besitzen und eine Anwendung über den Boden bzw. die Bewässerung von Pflanzen möglich ist. Sie können auch zur Beizung von Saatgut und Pflanzgut verwendet werden.

Bei den Spinosynen handelt es sich um bekannte Verbindungen. Das in US-5 362 634 beschriebene Fermentationsprodukt (A 83543) besteht aus verschiedenen Verbindungen, die als Spinosyn A, B, C, usw. bezeichnet werden (vgl. WO 97/00 265, WO 93/09 126 und WO 94/20 518). Die Spinosyne können durch die folgenden Formeln (I) bzw. (II) wiedergegeben werden.

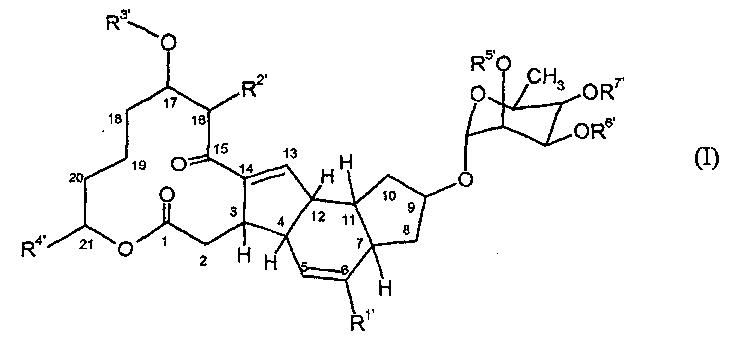

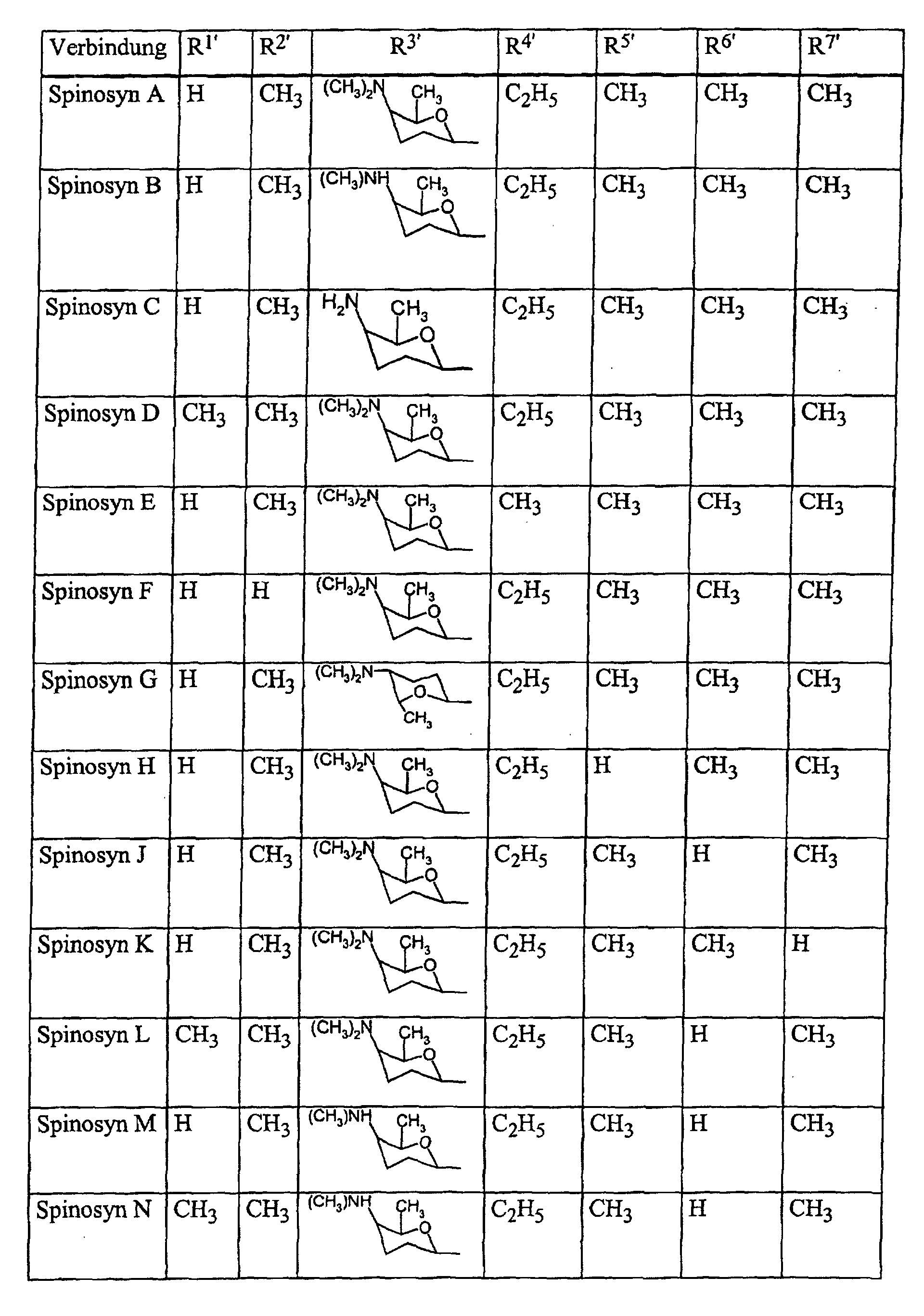

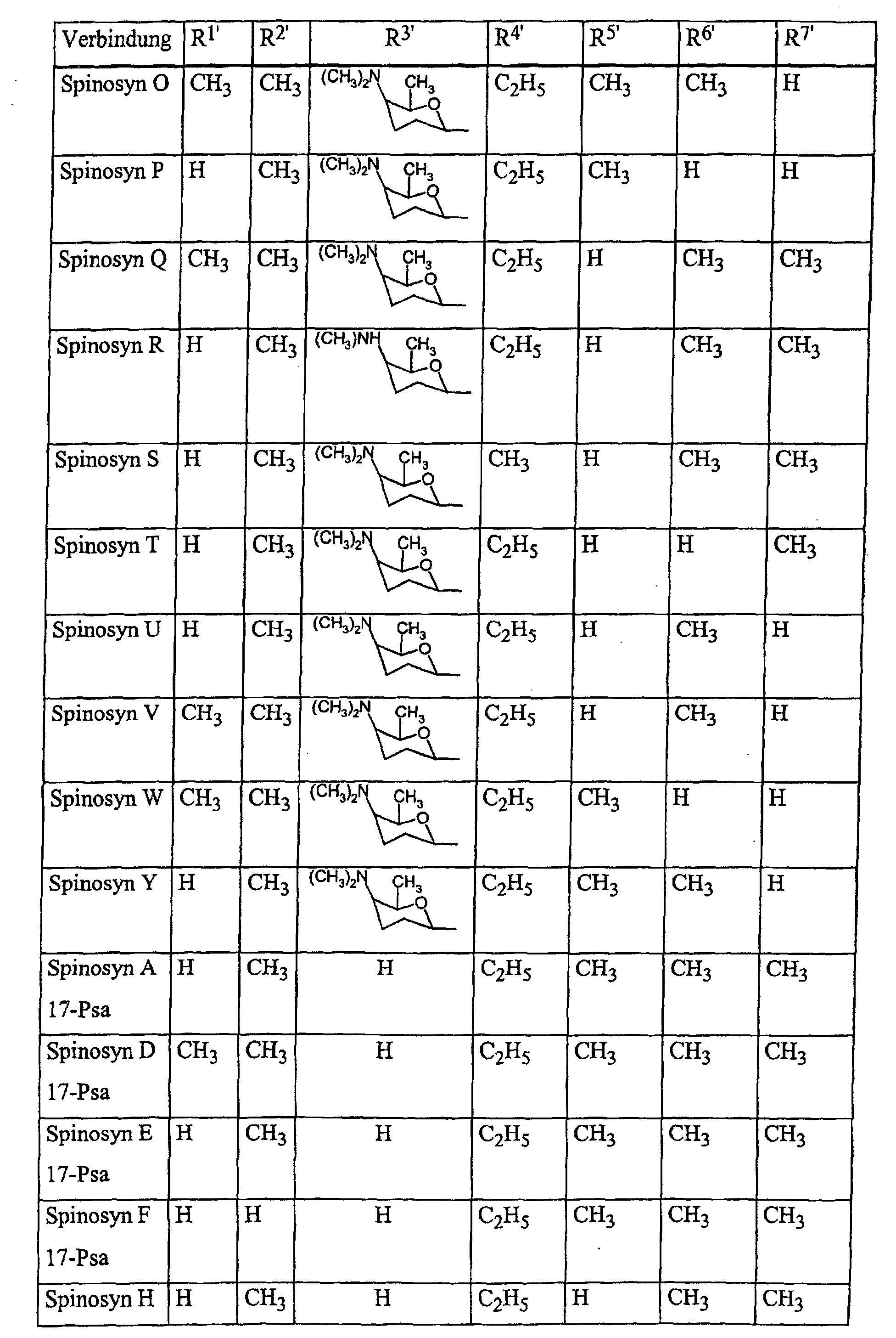

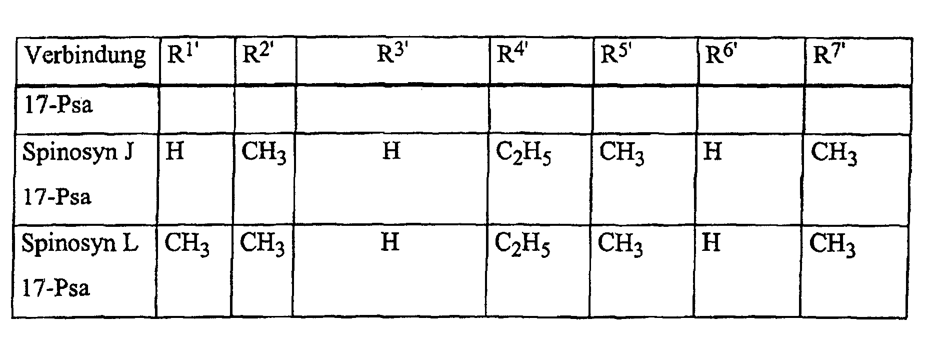

und

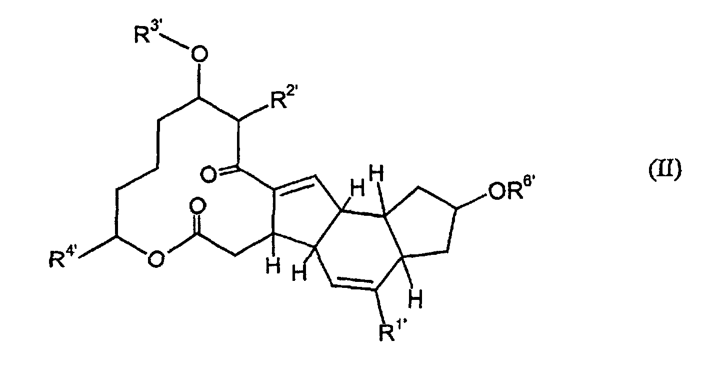

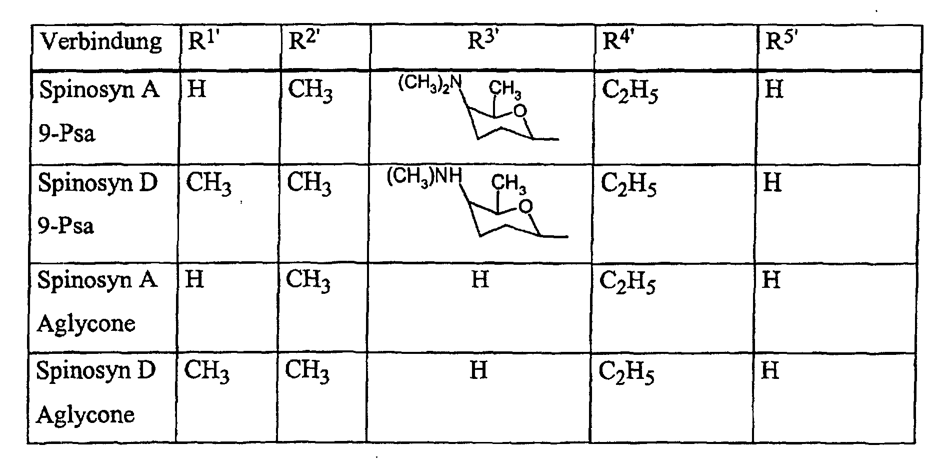

Es sind auch semisynthetische Spinosyne der Formel (Ia) 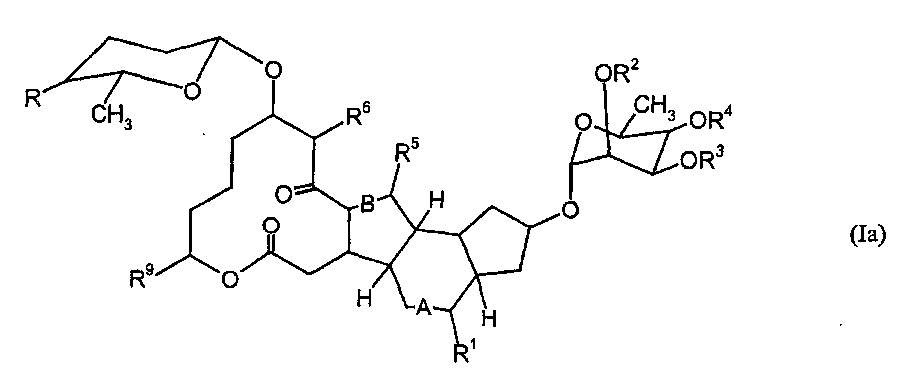 bekannt geworden (WO 97/00 265), worin
- A und B: jeweils für eine Einfachbindung, eine Doppelbindung oder eine Epoxideinheit stehen,
- R: für 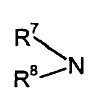 oder R^{8'}-O steht,
- R¹: für Wasserstoff oder Methyl steht,
- R², R³ und R⁴: unabhängig voneinander für C₁-C₄-Alkyl, C₁-C₄-Halogenalkyl, C₁-C₄-Alkylcarbonyl oder geschütztes Hydroxyl stehen,
- R⁵: für Wasserstoff, C₁-C₄-Alkyl, C₁-C₄-Alkylamino oder für Alkylhydroxylamino der Formel 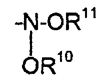 steht,
worin
R¹⁰ und R¹¹ unabhängig voneinander für Wasserstoff, C₁-C₄-Alkyl oder C₁-C₅-Alkylcarbonyl stehen,
- R⁶: für Wasserstoff oder Methyl steht,
- R⁷, R⁸ und R^{8'}: unabhängig voneinander für C₁-C₄-Alkyl, C₁-C₄-Halogenalkyl oder C₁-C₄-Alkylcarbonyl oder für geschütztes Amino stehen und
- R⁹: für Methyl oder Ethyl steht.

Die Bezeichnung "Spinosyn", wie sie hierin verwendet wird, umfaßt die Verbindungen, die in WO 97/00 265 offenbart sind.

Für die erfindungsgemäße Verwendung können einzelne Spinosyne, aber auch Mischungen der genannten Spinosyne der Formeln (I), (Ia) und (II) eingesetzt werden.

Bevorzugt werden Mischungen mit mindestens einem Spinosyn der Formel (I) oder (II) verwendet.

Bevorzugt werden Mischungen verwendet, in denen ein Gemisch aus Spinosyn A und Spinosyn D vorliegt, wobei das Verhältnis von Spinosyn A zu Spinosyn D im allgemeinen zwischen etwa 80:20 und etwa 98:2 liegt, wobei ein Wert von etwa 85:15 bevorzugt ist. Besonders bevorzugt wird Spinosad (siehe z.B. DowElanco trade magazin Down to Earth, Vol. 52, No. 1, 1997 und die darin zitierte Literatur) verwendet, worin im wesentlichen ein Gemisch von Spinosyn A und Spinosyn D im Verhältnis von etwa 85:15 vorliegt.

Insbesondere wird das aus US-5 362 634 bekannte Fermentationsprodukt A 83543 verwendet, das etwa 85 bis 90 % Spinosyn A, etwa 10 bis 15 % Spinosyn D und kleinere Mengen der Spinosyne B, C, E, F, G, H und J enthält.

Es können auch die dort beschriebenen Säureadditionssalze verwendet werden.

Erfindungsgemäß werden vorzugsweise folgende Saatgut- bzw. Pflanzgutarten gebeizt:
Mais, Getreide (wie z.B. Weizen, Gerste, Hafer, Roggen), Reis, Kartoffelpflanzgut, Baumwolle, Raps, Sonnenblume, Rüben (wie z.B. die Zuckerrübe), Gemüsesaatgut (wie z.B. Zwiebel, Kohl, Tomate), (Futter-)Leguminosen, Erdnüsse, Soja, Sorghum.
Folgende allgemeine Beizverfahren kommen zur Durchführung der erfindungsgemäßen Saatgut- bzw. Pflanzgutbeizung vorzugsweise in Frage:
   Trockenbeizen (vorzugsweise unter Zusatz von Haftvermittlern wie z.B. Paraffinöl oder Talkum) und gegebenenfalls Farbstoffen,
   Schlämmbeizen (vorzugsweise unter Zusatz von Netzmitteln, Dispergiermitteln, Emulgatoren, Klebern, inerten Füllstoffen und Farbstoffen),
   Wäßrige Flüssigbeizen (vorzugsweise unter Zusatz von Emulgatoren, Dispergiermitteln, Verdickungsmitteln, Frostschutzmitteln, Polymeren, Klebern und Farbstoffen),
   Lösungsmittelhaltige Flüssigbeizen (unter Zusatz von Lösungsmitteln und Farbstoffen),
   Emulsionsbeizen (unter Zusatz von Emulgatoren, Lösungsmitteln und Farbstoffen).

Die Spinosyn-Beizformulierungen enthalten vorzugsweise 10 bis 80 Gew.-% Gesamtwirkstoffanteil.

Pro 100 kg Saatgut bzw. Pflanzengut werden vorzugsweise 1 bis 300 g Wirkstoff in Form einer Beize aufgebracht.

Das erfindungsgemäße Beizverfahren wird in üblichen Beizgeräten bzw. Trommelmischern, wie sie z.B. in der Bauindustrie üblich sind, durchgeführt.

Hierbei werden Saatgut (bzw. Pflanzgut) und Saatgut-Beizformulierung (bzw. Pflanzgut-Beizformulierung) in einem praxisüblichen Beizgerät innig vermischt.

Nach dem Beizen des Saatgutes (bzw. Pflanzgutes) wird im Falle der Naßbeizen im ausreichenden Maße getrocknet, anschließend das so erhaltene gebeizte Saatgut (bzw. Pflanzengut) portionsweise abgefüllt.

Beim Ausbringen des erfindungsgemäß gebeizten Saatgutes bzw. Pflanzengutes werden im allgemeinen 1 bis 5 000 kg gebeiztes Saatgut (bzw. Pflanzgut) pro Hektar Anbaufläche, vorzugsweise 100 bis 300kg Saatgut (bzw. Pflanzgut) pro Hektar Anbaufläche, aufgewendet.

Überraschenderweise wurde gefunden, daß die Spinosyne systemische Eigenschaften besitzen und über den Boden ausgebracht eine sehr gute Wirkung gegen die weiter unten genannten tierischen Schädlinge aufweisen.

Hier wird vorteilhaft Granulat, welches den oder die Wirkstoffe enthält, in oder auf den Boden ausgebracht. In Frage kommen beispielsweise broadcast-, Band-, Furchen- und Pflanzlochapplikation. Unter broadcast-applikation versteht man das oberflächige Ausbringen des Wirkstoffs über die gesamte zu behandelnde Fläche mit einer anschließenden mechanischen Einarbeitung in den Boden.

Insbesondere sei die Anwendung in Pflanzkästen (Saatkästen) im Reisanbau erwähnt (nursery box treatment).

Besonders vorteilhaft ist es, die Spinosyne oder ihre Salze in Wasser zu emulgieren oder zu lösen und dieses zur Bewässerung der Pflanzen zu verwenden.

In Frage kommen beispielsweise Spritzungen auf den Boden, Drenching, d.h. das Angießen der Pflanzen mit wirkstoffhaltigen Lösungen und Tröpfchenbewässerung (Drip-Irrigation), sowie die Anwendung in Hydrokulturen, insbesondere im Gemüseund Zierpflanzenanbau.

Die Spinosyne können auch über den Stamm appliziert werden, beispielsweise durch eine Stamminjektion.

Die erfindungsgemäßen Saatgutbeizen eignen sich zur Bekämpfung von tierischen Schädlingen, die oberirdische Pflanzenteile angreifen. Sie sind gegen normal sensible und resistente Arten sowie gegen alle oder einzelne Entwicklungsstadien wirksam.

Die Schädlinge sind ausgewählt aus der Gruppe bestehend aus
Melanoplus differentialis, Schistocerca gregaria, Forficula auricularia, Reticulitermes spp., Phylloxera vastatrix, Pemphigus spp., Trichodectes spp.,Damalinea spp.,Frankliniella occidentalis, Hercinothrips femoralis,Thrips palmi, Thrips tabaci, Eurygaster spp., Dysdercus intermedius, Piesma quadrata, Rhodnius prolix, Triatoma spp., Aleurodes brassicae, Bemisia tabaci, Trialeurodes vaporariorum, Aphis gossypii, Brevicoryne brassicae, Cryptomyzus ribis, Aphis fabae, Eriosoma lanigerum, Hyalopterus arundinis, Macrosiphum avenae, Myzus spp., Phorodon humuli, Rhopalosiphum padi, Empoasca spp, Euscelis bilobatus, Nephotettix cincticeps, Lecanium corni, Saissetia olea, Laodelphax striatellus, Nilaparvata lugens, Aonidiella aurantii, Asipidiotus hederae, Pseudococcus spp., Psylla spp., Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyliocnistis citrella, Earias insulana, Heliothis spp., Spodoptera exigua, Mamestra brassicae, Panolis flammea, Prodenia litura, Spodoptera spp.,Trichoplusia ni, Carpocapsa pomonella, Pieris spp., Chilo spp., Pyrausta nubilalis, Cacoecia podana, Capua reticulana, Choristoneura fumiferana, Clysia ambiguella, Homona magnanima, Tortrix viridana, Phaedon cochleariae, Psylliodes chrysocephala, Epilachna varivestis, Antho nomus spp., Cosmopolites sordidus, Ceuthorrhynchus assimilis, Hypera postica, Meligethes aeneus, Diprion spp., Hoplocampa spp., Oscinella frit, Pegomyia hyoscyami, Ceratitis capitata, Dacus oleae, Bryobia paraetiosa, Panonychus spp., und Tetranychus spp..

### Beispiele

### Beispiel 1

### Herstellung von 20 %igen WS-Formulierungen zur insektiziden Saatgutbehandlung

"WS" bedeutet "water dispersible powder for slurry seed treatment" und bezeichnet einen Formuliertyp zur Saatgutbehandlung.
Rezeptur: Trägermaterial (Leerformulierung)
   2,0 % Brillantponceau E RC 70
   2,0 % Helioechtrubin 4B 10
   5,0 % Baykanol SL
   4,0 % Ultrasil VN3 Pulv.
   1,5 % Emulgator 1000 TR U gemahlen
   0,8 % Baysilone - Entschäumer E VM 30
   84,7 % Kaolin W
Methodik: Es sollen 1 g einer 20 %igen WS-Formulierung hergestellt werden.
   200 mg Wirkstoff abwiegen, in Achatmörser ⌀ 6,5 cm einfüllen, je nach Aggregatzustand des Stoffes ein geeignetes Lösungsmittel (ACETON) zugeben, lösen und mit 800 mg Leerformulierung zurücktrocknen lassen. Nach ca. 1-2 min das ganze mörsern bis zur vollkommenen Trocknung und in Präparatefläschen einfüllen.

### Beispiel 2

### Grenzkonzentration-Wirkungsdauer/Wurzelsystemisch

Testinsekt: Spodoptera frugiperda
Testpflanze: Zea mays (Körnermais)

Dosis:
   4 g ai/kg → 200 mg (20 %ige WS/10 g Saatgut)
   2 g ai/kg → 100 mg (20 %ige WS/10 g Saatgut)
   1 g ai/kg → 50 mg (20 %ige WS/10 g Saatgut)
Methode:
   Die jeweils angegebene Menge WS-Formulierung in numerierte Rundtöpfe (Typ 41, 90 ml) einwiegen und mit 200, 100, 80 µl Wasser dispergieren. 10 g Maissaatgut dazu geben. Auf einem Reagenzglasrüttler bei Stufe 7 mit Hilfe eines Einmalspatels den Mais ca. 1 - 2 min behandeln.
   Die Aussaat der Maiskörner erfolgt in numerierte Rundtöpfe (⌀ 11 cm), die mit BI-Erde gefüllt werden. Je Topf 2 Saatlöcher eindrücken und pro Saatloch 1 Maiskorn auslegen, schließen, und mit einem Stempel (⌀ 10 cm) andrücken (1 Wiederholung). Anschließend angießen und mit Folie abdecken.
   Nach 14, 21, 28, 35 Tagen wird von den Pflanzen Blattmaterial zum Abtesten abgeschnitten und in dafür vorbereitete Petrischalen (Fa. Greiner, ⌀ 9 cm) gelegt. Die Kulturschalen wurden zuvor numeriert und mit einer angefeuchteten (1,3 ml Wasser) Filterscheibe (S+S Rundfilter; ⌀ 8 cm; Ref.-No. 330 035) ausgelegt. (1 Wiederholung)
   In die Petrischalen mit den Maisblättern werden dann jeweils 6 Spodoptera Larven (L2-Stadium) eingezählt.
   Jeweils 5-6 Tage nach der Infektion wird der Wirkungsgrad in % anhand der Kontrolle und des Fraßbildes bestimmt.
   Standorttemperatur: 20 °C
   Unter den o.g. Bedingungen zeigte Spinosad eine gute insektizide Wirkung.

### Beispiel 3

### Wirkungsdauer / Wurzelsystemisch

Testinsekt: Phaedon cochleariae (Larven)
Testpflanze: Brassica oleracea (Kohl)
Dosis:
   2,0 g ai/kg → 20 mg (20 %ige WS/2 g Saatgut)
   1,0 g ai/kg → 10 mg (20 %ige WS/2 g Saatgut)
   0,5 g ai/kg → 5 mg (20 %ige WS/2 g Saatgut)
Methode:
   Die jeweils angegebene Menge WS-Formulierung in numerierte Rundtöpfe (Typ 41, 90 ml) einwiegen und mit 80 µl Wasser dispergieren. 2 g Kohlsaatgut dazu geben. Auf einem Reagenzglasrüttler bei Stufe 7 mit Hilfe eines Einmalspatels das Kohlsaatgut ca. 1 - 2 min behandeln.
   Die Aussaat des Kohls erfolgt in numerierte Rundtöpfe (⌀ 11 cm), die mit BI-Erde gefüllt werden. Eine Saatfurche eindrücken und in der Mitte des Topfes, auf etwa 3 cm, ca. 6 Samen auslegen, Saatfurche schließen, und mit einem Stempel (⌀ 10 cm) andrücken (7 Wiederholungen). Anschließend angießen und mit Folie abdecken.
   Nach Auflauf der Kohlpflanzen werden Bohrhülsen (Länge 20 cm, ⌀ 5 cm) auf die Töpfe gesetzt, wobei der obere Rand mit Talkum (ca. 2 cm) behandelt wird.
   Im Abstand von 7, 14, 21, 28 Tagen werden ca. 10 Phaedon-Larven in die Bohrhülsen eingezählt, wobei pro Woche und Konzentration nur 2 Töpfe infiziert werden.
   Nach jeweils 3 - 4 Tagen wird der Wirkungsgrad in % anhand des Fraßbildes bestimmt.
   Standorttemperatur: 20°C
   Unter den o.g. Bedingungen zeigte Spinosad eine gute insektizide Wirkung.

### Beispiel 4

### Grenzkonzentration - Wurzelsystemische Wirkung gegen Spodoptera frugiperda

### Material und technische Daten:

Plastiktöpfe (250 ml)
BI-Erde mit ca. 12 % Feuchte
Krefft-Mischer
vorgekeimter Mais (ca. 3 Tage alt)
durchsichtige Plastikrohre 5 cm Durchmesser / 50 cm Höhe
Spodoptera frugiperda Larven (L2-3 Stadium)
2 Wiederholungen

### Ziel:

Bestimmung der Grenzkonzentration von Prüfpräparaten im Boden.

### Methode:

### Herstellung der Laborformulierung:

Man löst die der Aufwandmenge entsprechende Menge Wirkstoff in 5 ml Aceton + Emulgator PS16 (4:1) und verdünnt sie mit Wasser auf eine 0,2 %ige Stammlösung.

### Durchführung des Ansatzes:

Die Plastiktöpfe werden mit BI-Erde gefüllt. Anschließend wird die entsprechende Menge Wirkstofflösung in die Erde pipettiert. Der Wirkstoff wird mit Erde im Krefft-Mischer 10 Sekunden auf höchster Stufe vermischt. Dann füllt man die Erde in die Töpfe und legt 3 vorgekeimte Maispflanzen in den Boden.

Die Töpfe werden im Gewächshaus bei 20°C und 70 % rel. Luftfeuchte aufgestellt. Wenn die Maispflanzen eine Größe von ca. 5 cm erreicht haben, werden durchsichtige Plastikrohre über die Pflanzen gestülpt und in die Bodenoberfläche eingedrückt. 1 Woche nach Versuchsansatz werden pro Topf 7 Spodoptera frugiperda Larven eingesetzt.

### Auswertung:

Jeweils 7 Tage nach der Infektion wird der Wirkungsgrad in % Abbott anhand der Kontrolle und des Fraßbildes bestimmt.

Unter den o.g. Bedingungen zeigte Spinosad eine gute insektizide Wirkung.

### Beispiel 5

### Grenzkonzentration - Wurzelsystemische Wirkung gegen Phaedon cochleariae Larven

### Material und technische Daten:

Plastiktöpfe (250 ml)
BI-Erde mit ca. 12 % Feuchte
Krefft-Mischer
ca. 3 Wochen alte Grünkohlpflanzen
Phaedon cochleariae Larven (2.-3.Larvenstadium)
2 Wiederholungen

### Ziel:

Bestimmung der Grenzkonzentration von Prüfpräparaten im Boden.

### Methode:

### Herstellung der Laborformulierung:

Man löst die der Aufwandmenge entsprechende Menge Wirkstoff in 5 ml Aceton + Emulgator PS16 (4:1) und verdünnt sie mit Wasser auf eine 0,2 %ige Stammlösung.

### Durchführung des Ansatzes:

Die Plastiktöpfe werden mit BI-Erde gefüllt. Anschließend wird die entsprechende Menge Wirkstofflösung in die Erde pipettiert. Der Wirkstoff wird mit Erde im Krefft-Mischer 10 Sekunden auf höchster Stufe vermischt. Dann füllt man die Erde in die Töpfe und bepflanzt sie mit Kohlpflanzen.

Die Töpfe werden im Gewächshaus bei 20°C und 70 % rel. Luftfeuchte aufgestellt. 1 Woche nach Ansatz werden die Versuchspflanzen mit Phaedon cochleariae Larven infiziert. Dazu werden 10 Larven in Tierkammern eingezählt und auf ein junges Blatt geklammert.

### Auswertung:

Jeweils 3 Tage nach der Infektion wird der Wirkungsgrad in % Abbott anhand der Kontrolle und des Fraßbildes bestimmt.

Unter den o.g. Bedingungen zeigte Spinosad eine gute insektizide Wirkung.

## Patentansprüche

1. Verfahren zur Bekämpfung von tierischen Schädlingen, die oberirdische Pflanzenteile angreifen, wobei die Schädlinge aus der Gruppe bestehend aus
Melanoplus differentialis, Schistocerca gregaria, Forficula auricularia, Reticulitermes spp., Phylloxera vastatrix, Pemphigus spp., Trichodectes spp.,Damalinea spp.,Frankliniella occidentalis, Hercinothrips femoralis,Thrips palmi, Thrips tabaci, Eurygaster spp., Dysdercus intermedius, Piesma quadrata, Rhodnius prolix, Triatoma spp., Aleurodes brassicae, Bemisia tabaci, Trialeurodes vaporariorum, Aphis gossypii, Brevicoryne brassicae, Cryptomyzus ribis, Aphis fabae, Eriosoma lanigerum, Hyalopterus arundinis, Macrosiphum avenae, Myzus spp., Phorodon humuli, Rhopalosiphum padi, Empoasca spp, Euscelis bilobatus, Nephotettix cincticeps, Lecanium corni, Saissetia olea, Laodelphax striatellus, Nilaparvata lugens, Aonidiella aurantii, Asipidiotus hederae, Pseudococcus spp., Psylla spp., Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculaₜrix thurberiella, Phyliocnistis citrella, Earias insulana, Heliothis spp., Spodoptera exigua, Mamestra brassicae, Panolis flammea, Prodenia litura, Spodoptera spp.,Trichoplusia ni, Carpocapsa pomonella, Pieris spp., Chilo spp., Pyrausta nubilalis, Cacoecia podana, Capua reticulana, Choristoneura fumiferana, Clysia ambiguella, Homona magnanima, Tortrix viridana, Phaedon cochleariae, Psylliodes chrysocephala, Epilachna varivestis, Antho nomus spp., Cosmopolites sordidus, Ceuthorrhynchus assimilis, Hypera postica, Meligethes aeneus, Diprion spp., Hoplocampa spp., Oscinella frit, Pegomyia hyoscyami, Ceratitis capitata, Dacus oleae, Bryobia paraetiosa, Panonychus spp., und Tetranychus spp., ausgewählt sind, umfassend das Aufbringen von einem oder mehreren Spinosynen auf den die Pflanze umgebenden Boden oder auf das Saatgut dieser Pflanze.

2. Verfahren nach Anspruch 1, **dadurch gekennzeichnet, dass** ein oder mehrere Spynosyne auf den die Pflanze umgebenden Boden aufgebracht werden.

3. Verfahren nach Anspruch 1, **dadurch gekennzeichnet, dass** ein oder mehrere Spinosyne auf das Saatgut dieser Pflanze aufgebracht werden.

4. Verfahren nach einem der Ansprüche 1, 2 oder 3, **dadurch gekennzeichnet**, das man als Spinosyn Spinosad einsetzt.

## Claims

1. Method of controlling animal pests which attack aerial plant parts, the pests being selected from the group consisting of
Melanoplus differentialis, Schistocerca gregeria, Forficula auricularia, Reticulitermes spp., Phylloxera vastatrix, Pemphigus spp., Trichodectes spp., Damalinea spp., Frankliniella occidentalis, Hercinothrips femoralis, Thrips palmi, Thrips tabaci, Eurygaster spp., Dysdercus intermedius, Piesma quadrata, Rhodnius prolix, Triatoma sopp., Aleurodes brassicae, Bemisia tabaci, Trialeurodes vaporariorum, Aphis gossypii, Brevicoryne brassicae, Cryptomyzus ribis, Aphis fabae, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium comi, Saissetia olea, Laodelphax striatellus, Nilaparvata lugens, Aonidiella aurantii, Asipidiotus hederae, Pseudococcus spp., Psylla spp., Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyliocnistis citrella, Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Cacoecia podana, Capua reticulana, Choristoneura fumiferana, Clysia ambiguella, Homona magnanima, Tortrix viridana, Phaedon cochleariae, Psylliodes chrysocephala, Epilachna varivestis, Anthonomus spp., Cosmopolites sordidus, Ceuthorrhynchus assimilis, Hyperapostica, Meligethes aeneus, Diprion spp., Hoplocampa spp., Oscinella frit, Pegomyia hyoscyami, Ceratitis capitata, Dacus oleae, Bryobia paraetiosa, Panonychus spp., and Tetranychus spp.,
in which one or more spinosyns are applied to the soil surrounding the plant or to the seed of the plant.

2. Method according to Claim 1, **characterized in that** one or more spinosyns are applied to the soil surrounding the plant.

3. Method according to Claim 1, **characterized in that** one or more spinosyns are applied to the seed of this plant.

4. Method according to one of Claims 1, 2 or 3, **characterized in that** spinosad is employed as the spinosyn.

## Revendications

1. Procédé de lutte contre des parasites animaux qui attaquent des parties aériennes de plantes, les parasites étant choisis dans le groupe constitué de :
Melanoplus differentialis, Schistocerca gregaria, Forficula auricularia, Reticulitermes spp., Phylloxera vastatrix, Pemphigus spp., Trichodectes spp., Damalinea spp., Frankliniella occidentalis, Hercinothrips femoralis, Thrips palmi, Thrips tabaci, Eurygaster spp., Dysdercus intermedius, Piesma quadrata, Rhodnius prolix, Triatoma spp., Aleurodes brassicae, Bemisia tabaci, Trialeurodes vaporariorium, Aphis gossypii, Brevicoryne brassicae, Cryptomyzus ribis, Aphis fabae, Eriosoma lanigerum, Hyalopterus arundinis, Macrosiphum avenae, Myzus spp., Phorodon humuli, Rhopalosiphum padi, Empoasca spp, Euscelis bilobatus, Nephotettix cincticeps, Lecanium corni, Saissetia olea, Laodelphax striatellus, Nilaparvata lugens, Aonidiella aurantii, Aspidiotus hederae, Pseudococcus spp., Psylla spp., Pectinophora gossypiella, Bupalus piniarus, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyliocnistis citrella, Earias insulana, Heliothis spp., Spodoptera exigua, Mamestra brasicae, Panolis flammea, Prodenia litura, Spodoptera spp., Trichoplusia ni, Carpocapsa pomonella, Pieris spp., Chilo spp., Pyrausta nubilalis, Cacoecia podana, Capua reticulana, Choristoneura fumiferana, Clysia ambiguella, Homona magnanima, Tortrix viridana, Phaedon cochleariae, Psylliodes chrysocephala, Epilachna varivestis, Anthonomus spp., Cosmopolites sordidus, Ceuthorrhynchus assimilis, Hypera postica, Meligethes aeneus, Diprion spp., Hoplocampa spp., Oscinella frit, Pegomyia hyoscyami, Ceratitis capitata, Dacus oleae, Bryobia praetiosa, Panonychus spp. et Tetranychus spp.,
comprenant l'épandage d'une ou plusieurs spinosynes sur le sol environnant la plante ou sur la semence de cette plante.

2. Procédé suivant la revendication 1, **caractérisé en ce qu'**une ou plusieurs spinosynes sont appliquées au sol environnant la plante.

3. Procédé suivant la revendication 1, **caractérisé en ce qu'**une ou plusieurs spinosynes sont appliquées à la semence de la plante concernée.

4. Procédé suivant l'une des revendications 1, 2 et 3, **caractérisé en ce que** la spinosyne utilisée est le produit spinosad.
